# EUROPEAN PATENT APPLICATION

(11) **EP 1 463 284 A1**
(43) Date of publication of application: **29.09.2004**
(21) Application number: 04004808.4
(22) Date of filing: 02.03.2004
(51) Int. Cl.: H04N 1/00

(54) **Electronic apparatus and guidance output method therefore**

(30) Priority: 10.03.2003 JP 2003064242; 12.02.2004 JP 2004035002
(71) Applicant: Ricoh Company, Ltd., Tokyo 143-8555 (JP)
(72) Inventor: Hananoi, Takashi, Setagaya-ku Tokyo (JP)
(74) Representative: Schwabe - Sandmair - Marx

(57) **Abstract**

A guidance output method is adapted to an electronic apparatus having a guidance part (7) which indicates guidance information including operation procedures and warnings related to maintenance. The guidance part is provided at a location corresponding to an apparatus part, within the electronic apparatus, to which the guidance information is related. The guidance output method displays, in response to a display instruction, guidance information indicated by a corresponding guidance part, on a display part (7) of the electronic apparatus.

## Description

### BACKGROUND OF THE INVENTION

This application claims the benefit of Japanese Patent Applications No.2003-064242 filed March 10, 2003 and No.2004-035002 filed February 12, 2004, in the Japanese Patent Office, the disclosure of which is hereby incorporated by reference.

### 1. Field of the Invention

The present invention generally relates to, and more particularly to guidance output methods, electronic apparatuses and computer-readable storage media, and more particularly to a guidance output method for outing guidance information such as operation procedures, warnings and methods of contacting services related to maintenance of an electronic apparatus, an electronic apparatus which employs such a guidance output method, and a computer-readable storage medium which stores a program for causing a computer to output guidance by such a guidance output method.

### 2. Description of the Related Art

When a jam of a document or a recording paper occurs in a copying apparatus, for example, an operator opens a cover or the like of the copying apparatus and eliminates the jam according to operation procedures indicated on an inner side of the cover or the like. Such operation procedures related to maintenance are printed on a sheet-shaped member which is generally referred to as a label, seal or decal, and the sheet-shaped member is adhered on the inner side of the cover or the like. Description items (hereinafter referred to as guidance information) printed on the sheet-shaped member are not limited to the operation procedures, and may include operating instructions, cautions, warnings, layout of parts within the apparatus, product name or model number of the apparatus, rating faceplate indicating rated voltages and rated currents, methods of contacting services, and the like. For example, the cautions or warnings printed on the sheet-shaped member may be related to temperature, fire, and electrification.

The sheet-shaped member indicating the guidance information is used not only in copying apparatuses, but also in various electronic apparatuses such as facsimile apparatuses, printing apparatuses, composite apparatuses, air conditioning apparatuses and vending machines.

However, in many cases, the sheet-shaped member is provided at a relatively low portion of the electronic apparatus, on the back side of a cover and the like. For this reason, depending on an environment in which the electronic apparatus is used, it may be difficult to read the guidance information printed on the sheet-shaped member. In addition, when the sheet-shaped member is dirtied by the dirt and dust within the electronic apparatus, it becomes difficult to read the guidance information printed on the sheet-shaped member.

Furthermore, when an attempt is made to print as much amount of information as possible within the limited area of the sheet-shaped member, characters, pictures and the like forming the guidance information become small, and it becomes difficult to read the guidance information, regardless of the eyesight of the operator.

On the other hand, the guidance information may be printed using colors which are difficult to discriminate (or distinguish). Particularly in a case where the operator has anomalous color vision, it may be difficult to read the guidance information depending on the colors. Depending on the particular anomalous color vision, it may be difficult to distinguish green and red, gray and red or, gray and green, and there are cases where blue and yellow are easily confused or the colors are uneasily distinguished. Accordingly, if the guidance information is printed using colors which are uneasily discriminated by the operator having the anomalous color vision, the red may appear dark, the red and green may be indistinguishable, the green and brown may be confused, and the orange and yellow may be confused, for example. In general, color combinations which may easily be recognized erroneously are red and green, green and brown, orange and yellow, blue and purple or black, pink and gray or white.

In order to make it easier to read the guidance information printed on the sheet-shaped member and prevent erroneous recognition by the operator, an electronic apparatus provided with a removable sheet-shaped member has been proposed in a Japanese Laid-Open Patent Application No.7-72692, for example. According to this proposed electronic apparatus, the operator removes the sheet-shaped member from the electronic apparatus and reads the guidance information at a position where it is easier to read the guidance information. After the guidance information is read and the necessary operations are carried out with respect to the electronic apparatus, the operator returns the sheet-shaped member back to the original position within the electronic apparatus. However, it requires a troublesome operation to return the sheet-shaped member back to the original position within the electronic apparatus. In addition, if a plurality of sheet-shaped members are removed from the electronic apparatus, it may become impossible to return all of the sheet-shaped members back to the respective original positions or, the operator may forget to return the sheet-shaped member and the sheet-shaped member may become lost. Moreover, if the guidance information is printed using the colors which are difficult to discriminate, the removal of the sheet-shaped member does not change the fact that the colors are difficult to discriminate. Furthermore, even if the sheet-shaped member is made removable from the electronic apparatus, the area in which the guidance information may be printed is basically the same as the conventional fixed type sheet-shaped member, and the amount of information that may be included in the guidance information is very limited.

Therefore, since in many cases the sheet-shaped member is provided at a relatively low portion of the electronic apparatus, on the back side of a cover and the like, there were problems in that it is difficult to read the guidance information printed on the sheet-shaped member, especially depending on the environment in which the electronic apparatus is used and how dirty the sheet-shaped member is. In addition, because the area of the sheet-shaped member is limited, there were problems in that it becomes difficult to read the guidance information when a large amount of information is included in the guidance information, and that the amount of information included in the guidance information becomes small when the guidance information is made easily readable.

On the other hand, when the sheet-shaped member is made removable from the electronic apparatus, the guidance information becomes easier to read, but there were problems in that the troublesome operation becomes necessary to return the removed sheet-shaped member back to the original position within the electronic apparatus, and that when a plurality of sheet-shaped members are removed, it may become impossible to return all of the sheet-shaped members back to the respective original positions or, the operator may forget to return the sheet-shaped member back to its original position. In the latter case, the sheet-shaped member may become lost.

Furthermore, when the guidance information is printed on the sheet-shaped member using colors which are difficult to discriminate, there was a problem in that the guidance information may be erroneously recognized.

### SUMMARY OF THE INVENTION

Accordingly, it is a general object of the present invention to provide a novel and useful guidance output method, electronic apparatus and computer-readable storage medium, in which the problems described above are eliminated.

Another and more specific object of the present invention is to provide a guidance output method, an electronic apparatus and a computer-readable storage medium, which can output guidance information so that the guidance information will not be erroneously recognized, without requiring troublesome operations.

Still another and more specific object of the present invention is to provide a guidance output method for an electronic apparatus having a guidance part which indicates guidance information including operation procedures and warnings related to maintenance, the guidance part being provided at a location corresponding to an apparatus part, within the electronic apparatus, to which the guidance information is related, the guidance output method comprising the steps of displaying, in response to a display instruction, guidance information indicated by a corresponding guidance part, on a display part of the electronic apparatus. According to the guidance output method of the present invention, it is possible to output the guidance information so that the guidance information will not be erroneously recognized, without requiring troublesome operations.

The displaying step of the guidance output method may display the guidance information on the display part after subjecting the guidance information to a color conversion process for facilitating color discrimination and/or an enlarging conversion process in response to a conversion instruction. In this case, it is possible to facilitate color discrimination and positively prevent erroneous recognition of the guidance information.

The guidance output method may further comprise the steps of printing the guidance information in response to a print instruction. In this case, it is possible to positively prevent erroneous recognition of the guidance information.

A further object of the present invention is to provide an electronic apparatus comprising a display part; a plurality of apparatus parts subject to maintenance; at least one guidance part to indicate guidance information including operation procedures and warnings related to maintenance, the guidance part being provided at a location corresponding to one of the apparatus parts to which the guidance information is related; and a controller to display guidance information indicated by a corresponding guidance part on the display part, in response to a display instruction. According to the electronic apparatus of the present invention, it is possible to output the guidance information so that the guidance information will not be erroneously recognized, without requiring troublesome operations.

The controller of the electronic apparatus may display the guidance information on the display part after subjecting the guidance information to a color conversion process for facilitating color discrimination and/or an enlarging conversion process in response to a conversion instruction. In this case, it is possible to facilitate color discrimination and positively prevent erroneous recognition of the guidance information.

The electronic apparatus may further comprise a printing part, the controller printing the guidance information by the printing part in response to a print instruction. In this case, it is possible to positively prevent erroneous recognition of the guidance information.

Another object of the present invention is to provide a computer-readable storage medium which stores a program for a computer within an electronic apparatus having a guidance part which indicates guidance information including operation procedures and warnings related to maintenance, the guidance part being provided at a location corresponding to an apparatus part, within the electronic apparatus, to which the guidance information is related, the program causing the computer to display the guidance information and comprising a display procedure causing the computer to display, in response to a display instruction, guidance information indicated by a corresponding guidance part, on a display part of the electronic apparatus. According to the computer-readable storage medium of the present invention, it is possible to output the guidance information so that the guidance information will not be erroneously recognized, without requiring troublesome operations.

The display procedure of the computer-readable storage medium may cause the computer to display the guidance information on the display part after subjecting the guidance information to a color conversion process for facilitating color discrimination and/or an enlarging conversion process in response to a conversion instruction. In this case, it is possible to facilitate color discrimination and positively prevent erroneous recognition of the guidance information.

The program of the computer-readable storage medium may further comprise a print procedure causing the computer to print the guidance information in response to a print instruction. In this case, it is possible to positively prevent erroneous recognition of the guidance information.

Still another object of the present invention is to provide an electronic apparatus comprising display means; a plurality of apparatus parts subject to maintenance; at least one guidance part to indicate guidance information including operation procedures and warnings related to maintenance, said guidance part being provided at a location corresponding to one of the apparatus parts to which the guidance information is related; and control means for displaying guidance information indicated by a corresponding guidance part on the display means, in response to a display instruction. According to the electronic apparatus of the present invention, it is possible to output the guidance information so that the guidance information will not be erroneously recognized, without requiring troublesome operations.

Other objects and further features of the present invention will be apparent from the following detailed description when read in conjunction with the accompanying drawings.

### BRIEF DESCRIPTION OF THE DRAWINGS

FIG. 1 is a perspective view showing a first embodiment of an electronic apparatus according to the present invention;
FIG. 2 is a diagram showing guidance information indicated by a guidance part;
FIG. 3 is a plan view showing an operation part;
FIG. 4 is a functional block diagram of a copying apparatus shown in FIG. 1;
FIG. 5 is a flow chart for explaining the first embodiment of the electronic apparatus;
FIG. 6 is a diagram showing guidance information displayed on the display part;
FIG. 7 is a flow chart for explaining an important part of a modification of the first embodiment of the electronic apparatus;
FIG. 8 is a diagram showing guidance information displayed on the display part;
FIG. 9 is a flow chart for explaining a second embodiment of the electronic apparatus according to the present invention;
FIG. 10 is a diagram showing guidance information displayed on the display part; and
FIG. 11 is a diagram showing another structure of the guidance part.

### DESCRIPTION OF THE PREFERRED EMBODIMENTS

A description will now be given of various embodiments of a guidance output method according to the present invention, an electronic apparatus according to the present invention, and a computer-readable storage medium according to the present invention, by referring to the drawings.

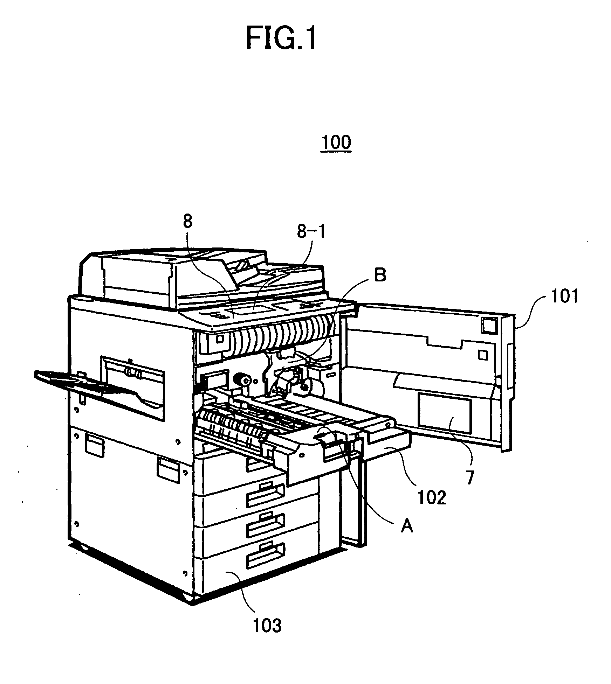

FIG. 1 is a perspective view showing a first embodiment of the electronic apparatus according to the present invention. In this first embodiment of the electronic apparatus, the present invention is applied to a copying apparatus. This first embodiment of the electronic apparatus employs a first embodiment of the guidance output method according to the present invention and a first embodiment of the computer-readable storage medium according to the present invention.

In the following description, the guidance information refers to operation procedures, operating instructions, warnings, cautions, layout of parts (apparatus parts) within the electronic apparatus, product name of the electronic apparatus, model number of the electronic apparatus, rated voltages, rated currents, methods of contacting services, and the like which are related to maintenance of the electronic apparatus. The maintenance of the electronic apparatus includes replacing expendable parts or rotatable parts, replenishing consumables, repairing failed parts, removing jammed recording sheet or eliminating sheet (or paper) jam, cleaning parts, and the like.

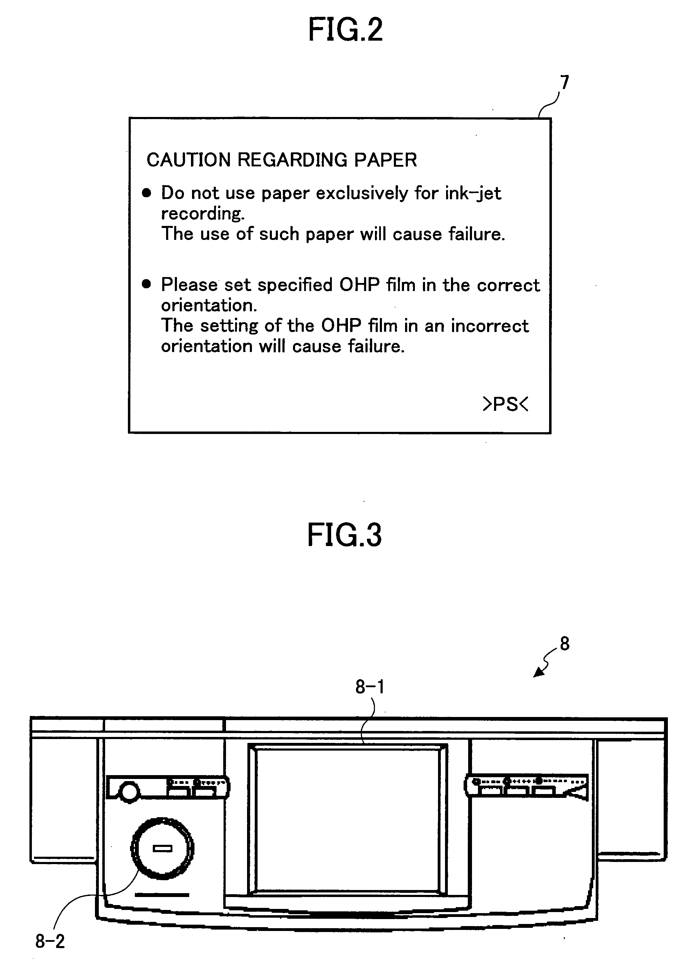

A copying apparatus 100 shown in FIG. 1 includes an operation part (or operation panel) 8, a cover (or door) 101, a drawer 103 and the like. FIG. 1 shows a state where the cover 101 is opened and an internal drawer 102 is pulled out. A guidance part 7 integrally provided with a switch (or sensor) is provided on an inner side of the cover 101. For example, the guidance part 7 has a built-in contact sensor, and when touched by an operator, the contact sensor of the guidance part 7 can detect that it has been touched (or selected). This guidance part 7 corresponds to the sheet-shaped member which is generally referred to as the label, seal or decal. The label is sometimes referred to as a warning label. FIG. 2 is a diagram showing the guidance information indicated on the guidance part 7.

In this embodiment, it is assumed for the sake of convenience that the guidance information which is to be displayed relates to the apparatus part provided on the internal drawer 102, and that the guidance information is indicated on the guidance part 7 which is provided at a location corresponding to the internal drawer 102. However, the number of guidance parts 7 is not limited to one, and a plurality of guidance parts 7 may be provided depending on the number of apparatus parts, within the copying apparatus 100, which are subject to the maintenance. One guidance part 7 may be provided at each of the locations corresponding to the apparatus parts to which the guidance information is related. For example, the guidance part 7 may be provided at locations corresponding to the apparatus parts located at positions A and B in FIG. 1.

FIG. 3 is a plan view showing the operation part 8 of the copying apparatus 100. The operation part 8 includes a display part 8-1, and various keys (or switches) including a "copy" key 8-2. The display part 8-1 may be formed by a touch-panel which also functions as switches.

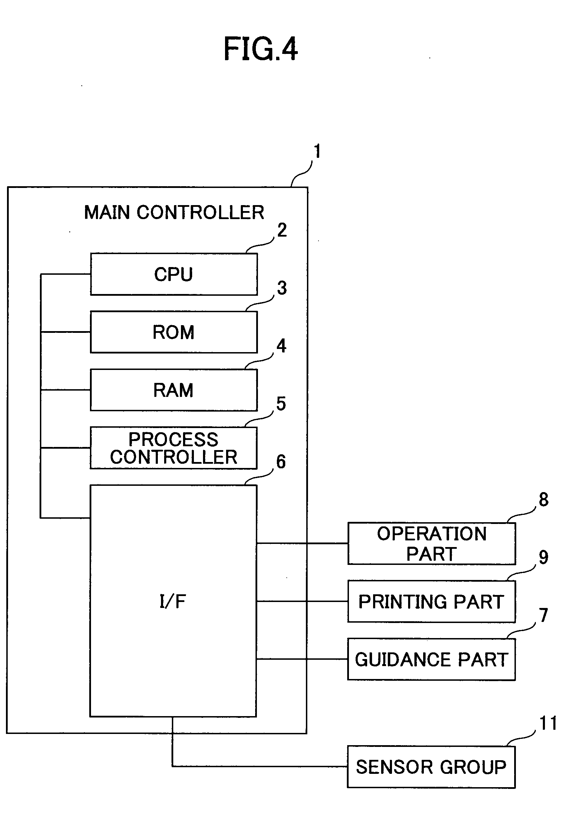

FIG. 4 is a functional block diagram of the copying apparatus 100. The copying apparatus 100 includes a main controller 1, the guidance part 7, the operation part 8, a printing part (or printer) 9, and a sensor group 11. The main controller 1 includes a CPU 2, a ROM 3, a RAM 4, a process controller 5 and an interface part (I/F) 6 which are mutually connected. The connection between the main controller 1 and the guidance part 7 may be formed by a wired connection or a wireless connection. In addition, when a plurality of guidance parts 7 are provided, each guidance part 7 is connected to the main controller 1.

The CPU 2 carries out a control with respect to the entire copying apparatus 100, including output control of the guidance information and information processing control. The ROM 3 stores various programs to be executed by the CPU 2. The programs stored in the ROM 3 include programs for varying out various control processes within the copying apparatus 100, identification information (position or number), a display program and guidance information of each guidance part 7, a display program of the operation part 8, a color conversion program, a enlargement conversion program and the like. The RAM 4 stores data such as intermediate data and result data of operations carried out by the CPU 2.

The process controller 5 carries out an arbitrary image processing for controlling a picture quality of the printing or the like, with respect to image data of a document which is read by a known image reading part (not shown). The interface part 6 is formed by a gate array, for example, and provides an interface between the main controller 1 and other apparatus parts of the copying apparatus 100. In other words, the interface part 6 controls transfer of a display instruction from the guidance part 7 to the CPU 2, transfer of various instructions from the operation part 8 to the CPU 2, and transfer of a display instruction and display data from the CPU 2 to the operation part 8.

The printing part 9 prints the image data of the document which is read by the image reading part, and the image data according to the display instruction from the CPU 2, onto a recording medium such as recording paper or sheet by a known method. The printing part 9 may be constructed to print monochrome images or color images. An image forming technique employed by the printing part 9 is not limited to a specific technique, and for example, the electrophotography technique, the ink-jet recording technique and the like may be employed.

The sensor group 11 is formed by a plurality of sensors for detecting states or abnormalities at various apparatus parts of the copying apparatus 100. Each sensor of the sensor group 11 has a known structure for notifying the detected state or abnormality of the corresponding apparatus part to the CPU 2. For example, when the sensor for detecting a paper jam at a certain apparatus part detects an abnormality, the CPU 2 receives an abnormality notification from this sensor, and displays a message or the like on the display part 8-1 by a known method to indicate that the paper jam is generated at the certain apparatus part. Accordingly, when the message or the like indicating the generation of the paper jam is displayed on the display part 8-1, the operator can carry out an operation to remove the cause of the paper jam. More particularly, the operator can open the cover 101 shown in FIG. 1, for example, pull out the internal drawer 102, and then remove the paper which is causing the paper jam. When removing the cause of the paper jam, the operator reads the guidance information indicated on the guidance part 7. By reading the guidance part 7, it is possible to know how the paper jam may be eliminated (operation procedures), high-temperature apparatus parts which should not be touched, the kinds of recording paper which should not be used, the correct way of setting the recording paper, and the like. Consequently, the operator can safely and quickly carry out the required operation for eliminating the paper jam by reading the guidance information indicated on the guidance part 7.

However, depending on the environment in which the copying apparatus 100 is used, it may be too dark for the operator to read the guidance information on the guidance part 7. In addition, if the guidance part 7 itself is small or, the characters and/or pictures of the guidance information indicated on the guidance part 7 are small and difficult to read, the operator may not be able to quickly carry out the necessary operation. Hence, in this embodiment, when the operator wishes to see the display of the guidance information indicated on the guidance part 7, the operator touches the guidance part 7 to trigger automatic display of the guidance information on the display part 8-1 of the operation part 8. The guidance information displayed on the display part 8-1 is very easy to read compared to the guidance information which is indicated on the guidance part 7 by printing or the like. For this reason, it is possible to positively prevent erroneous recognition of the guidance information, without having to carry out a troublesome operation of removing a sheet-shaped member which indicates the guidance information as was required in the case of the electronic apparatus proposed in the Japanese Laid-Open Patent Application No.7-72692 described above.

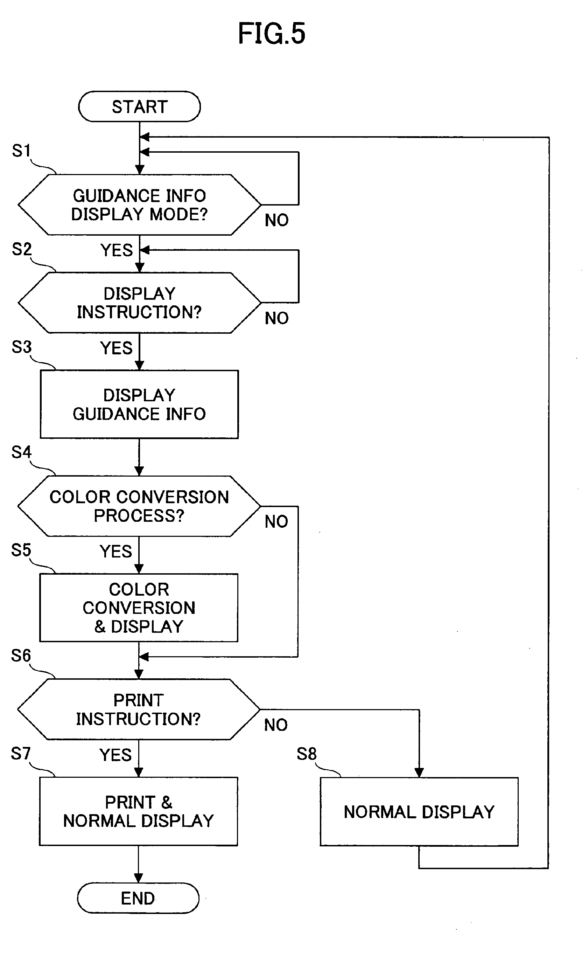

FIG. 5 is a flow chart for explaining the operation of this embodiment. The operation shown in FIG. 5 is carried out by the CPU 2 based on a computer program stored in the ROM 3 which forms the first embodiment of the computer-readable storage medium. The computer program may be stored in a computer-readable storage medium other than the ROM 3. In other words, the computer-readable storage medium of the present invention may be formed by any kind of storage media capable of storing the computer program in a computer-readable manner, including magnetic storage media, optical storage media, magneto-optical storage media and semiconductor memory devices.

In FIG. 5, a step S1 decides whether or not a guidance information display mode is set. When the guidance information display mode is set by a key operation of the operation part 8, the copying apparatus 100 is in a state capable of displaying the guidance information indicated on the guidance part 7. On the other hand, when the guidance information display mode is not set or, the guidance information display mode is cancelled by a key operation of the operation part 8, the copying apparatus 100 is in a state not capable of displaying the guidance information indicated on the guidance part 7. Accordingly, by not setting the copying apparatus 100 to the guidance information display mode, it is possible to prevent the guidance information from being erroneously displayed on the display part 8-1 by an erroneous operation.

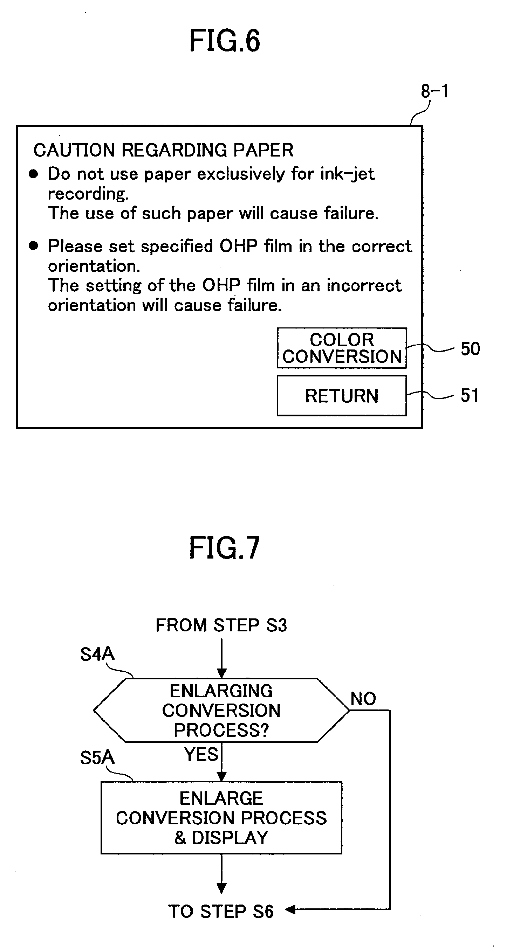

If the decision result in the step S1 is YES, a step S2 decides whether or not a display instruction to display the guidance information of the guidance part 7 is generated, that is, the operator has touched the guidance part 7. If the decision result in the step S2 is YES, a step S3 reads the guidance information corresponding to the guidance part 7 for which the display instruction is received, from the ROM 3, and displays the guidance information on the display part 8-1. FIG. 6 is a diagram showing the guidance information which is displayed on the display part 8-1. As may be seen from FIG. 6, the guidance information displayed on the display part 8-1 is basically the same as the guidance information indicated on the guidance part 7 shown in FIG. 2.

After the step S3, a step S4 decides whether or not to carry out a color conversion process with respect to the displayed guidance information. When a "color conversion" key 50 on the display part 8-1 shown in FIG. 6 is selected (pushed), the decision result in the step S4 becomes YES, and the process advances to a step S5. On the other hand, if a "return" key 51 on the display part 8-1 is pushed, the decision result in the step S4 becomes NO, and the process advances to a step S6.

The step S5 carries out a color conversion process for facilitating color discrimination, with respect to the guidance information, based on the color conversion program stored in the ROM 3, and displays the converted guidance information on the display part 8-1. This color conversion program has a plurality of color conversion patterns. For example, in the case of an operator who finds it difficult to discriminate the green and red, and the gray and red within the guidance information, it becomes easier to recognize the guidance information if the saturation (or chromaticness) or the depth of color of the read is changed or the red is changed to another color. In addition, in the case of an operator who easily confuses the blue and yellow within the guidance information, it becomes easier to recognize the guidance information if the saturation (or chromaticness) or the depth of color of the blue is changed or the blue is changed to another color. Hence, by making it possible to select the color conversion pattern that suits the operator, it is possible to avoid as much as possible color schemes of color combinations which are easily erroneously recognized, and to change the saturation (or chromaticness) or the depth of color of one or a plurality of colors or, to change one or a plurality of colors to one or a plurality of other colors, so that the display of the guidance information is converted into a display in which the color discrimination is facilitated. The color combinations which are easily erroneously recognized include the red and green, the green and brown, the orange and yellow, the blue and purple, the green and gray or black, and the pink and gray or white, for example. By carrying out the appropriate color conversion process as described above, it is possible to display the guidance information which is uneasily erroneously recognized, even by operators who have anomalous color vision, poor eyesight and the like. In this embodiment, a different color conversion pattern is selected each time the "color conversion" key 50 is pushed, thereby making it possible for the operator to select the colors in which the guidance information is to be displayed, which colors can be more easily discriminated by the operator.

The step S6 decides whether or not a print instruction is generated. When the "copy" key 8-2 on the operation part 8 is operated (pushed), the print instruction is generated, the decision result in the step S6 becomes YES, and the process advances to a step S7. On the other hand, when the "return" key 51 on the display part 8-1 is pushed, no print instruction is generated, the decision result in the step S6 becomes NO, and the process advances to a step S8. The step S7 supplies the guidance information to the printing part 9 to print the guidance information on the recording paper, and the process ends after returning the display on the display part 8-1 to a normal display. The printed guidance information has not been subjected to the color conversion process if the decision result in the sep S4 is NO, but has been subjected to the color conversion process if the decision result in the step S4 is YES. The step S8 returns the display on the display part 8-1 to the normal display, and the process returns to the step S1. The normal display refers to a display which enables normal copying functions of the copying apparatus 100 to be selected on the display part 8-1. Of course, a "print" key may be displayed on the display part 8-1 shown in FIG. 6, so that the print instruction is generated when this "print" key is pushed.

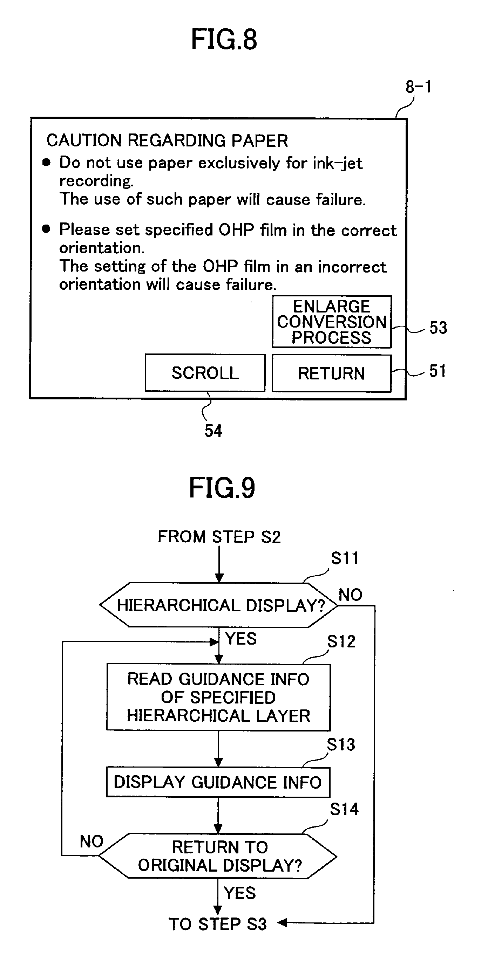

FIG. 7 is a flow chart for explaining an important part of the operation of a modification of the first embodiment, and FIG. 8 is a diagram showing the guidance information displayed on the display part 8-1 in this modification. In FIG. 7, those steps which are the same as those corresponding steps in FIG. 5 are designated by the same reference numerals, and an illustration and description thereof will be omitted. In this modification, steps S4A and S5A shown in FIG. 7 are provided in place of the steps S4 and S5 shown in FIG. 5. The step S4A decides whether or not an enlarging conversion process is to be carried out with respect to the displayed guidance information. In this case, when an "enlarge conversion" key 53 on the display part 8-1 shown in FIG. 8 is pushed, the decision result in the step S4A becomes YES, and the process advances to the step S5A. On the other hand, when the "return" key 51 on the display part 8-1 shown in FIG. 8 is pushed, the decision result in the step S4A becomes NO, and the process advances to the step S6.

The step S5A carries out an enlarging conversion process for facilitating discrimination of the characters and/or pictures of the guidance information, with respect to the guidance information, based on the enlarging conversion program stored in the ROM 3, and displays the converted guidance information on the display part 8-1. This enlarging conversion program has a plurality of enlarging conversion patterns. In this modification, a different enlarging conversion pattern is selected each time the "enlarging conversion" key 53 is pushed, thereby making it possible for the operator to select the magnification with which the guidance information is to be displayed, and more easily discriminate the characters and/or pictures of the guidance information. By carrying out the appropriate enlarging conversion process as described above, it is possible to display the guidance information which is uneasily erroneously recognized, even by operators who have anomalous color vision, poor eyesight and the like.

It is possible to carry out both the color conversion process and the enlarging conversion process. However, if the magnification of the enlarging conversion process is large compared to the display part 8-1, it may not be possible to display all of the guidance information simultaneously. In this case, a "scroll" key 54 on the display part 8-1 shown in FIG. 8 may be pushed to scroll the display of the guidance information. Of course, depending on the magnification of the enlarging conversion process, it may not be possible to print all of the guidance information, and in this case, it is desirable to only display the guidance information which has been subjected to the enlarging conversion process.

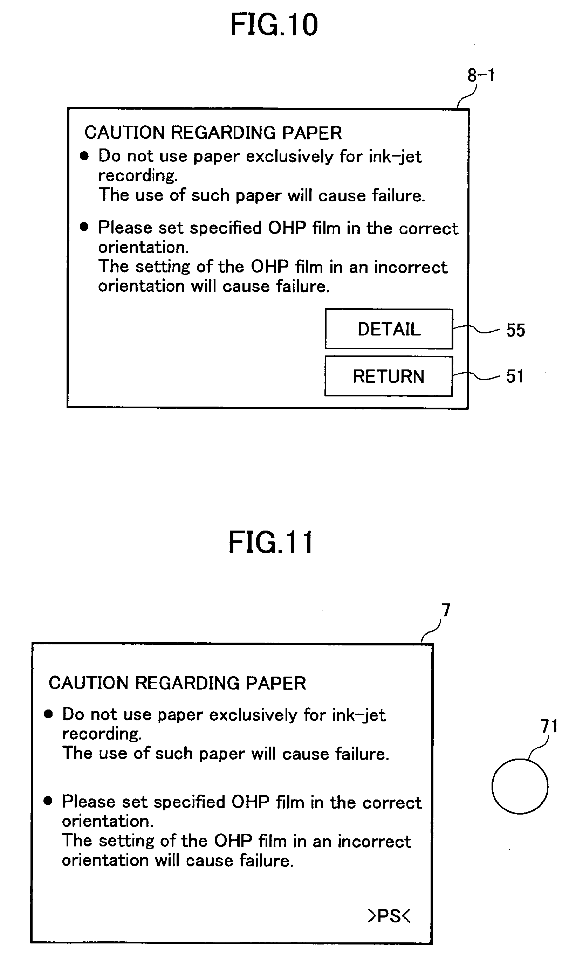

FIG. 9 is a flow chart for explaining the operation of a second embodiment of the electronic apparatus according to the present invention, and FIG. 10 is a diagram showing the guidance information displayed on the display part 8-1 in this second embodiment. In FIG. 9, those steps which are the same as those corresponding steps in FIG. 5 are designated by the same reference numerals, and illustration and description thereof will be omitted. This second embodiment of the electronic apparatus employs a second embodiment of the guidance output method according to the present invention and a second embodiment of the computer-readable storage medium according to the present invention. The operation shown in FIG. 9 is carried out by the CPU 2 based on a computer program stored in the ROM 3 which forms the second embodiment of the computer-readable storage medium. The computer program may be stored in a computer-readable storage medium other than the ROM 3.

Steps S11 through S14 shown in FIG. 9 are provided between the steps S2 and S3 shown in FIG. 5. The step S11 decides whether or not a hierarchical display of the guidance information is to be made. In this embodiment, guidance information having a hierarchical structure is stored in the ROM 3. In the case of the guidance information having the hierarchical structure, the contents of the guidance information in the lower layers of the hierarchical structure becomes more detailed. When a "detail" key 55 on the display part 8-1 shown in FIG. 10 is pushed, a hierarchical display instruction is generated, the decision result in the step S11 becomes YES, and the process advances to the step S12. The guidance information of a hierarchical layer which is one level lower than the hierarchical layer of the previously displayed guidance information is read from the ROM 3 every time the "detail" key 55 is pushed. Hence, more detailed guidance information can be obtained by pushing the "detail" key 55. On the other hand, when the "return" key 51 on the display part 8-1 is pushed, no hierarchical display instruction is generated, the decision result in the step S11 becomes NO, and the process advances to the step S3.

The step S12 reads from the ROM 3 the guidance information of a hierarchical layer depending on the number of times the "detail" button 55 is pushed. The step S13 displays the guidance information read from the ROM 3 on the display part 8-1. The step S14 decides whether or not to return the display on the display part 8-1 to the original guidance information which was initially displayed. The decision result in the step S14 becomes YES when the "return" key 51 on the display part 8-lis pushed, and the process advances to the step S3. On the other hand, if the "return" key 51 on the display part 8-1 is not pushed, the decision result in the step S14 is NO, and the process returns to the step S12.

By selecting the guidance information of an arbitrary hierarchical layer of the guidance information having the hierarchical structure, and displaying and/or printing the selected guidance information, the operator can obtain the guidance information having an extremely large amount of information if necessary. For this reason, it is possible to carry out the maintenance of the copying apparatus 100 more easily, more accurately, more safely, and more quickly.

In each of the embodiments described above, the guidance part 7 has the built-in sensor. However, the display instruction for the guidance information indicated on the guidance part 7 may be generated in response to a switch which is operated and is provided at a location corresponding to the guidance part 7.

FIG. 11 is a diagram showing another structure of the guidance part. As shown in FIG. 11, a switch 71 is provided at a position corresponding to the guidance part 7. When the operator operates the switch 71, a display instruction for the guidance information of the corresponding guidance part 7 is generated and notified to the CPU 2.

It is possible to provide a "guidance select" key on the display part 8-1. In this case, if a plurality of guidance parts 7 are provided, an identification number or the like may be assigned to each of the guidance parts 7, and the guidance information of the guidance part 7 having the next identification number may be displayed on the display part 8-1 every time the "guidance select" key is pushed.

The electronic apparatus according to the present invention is not limited to the copying apparatus, and the present invention is similarly applicable to various kinds of electronic apparatuses such as facsimile apparatuses, printing apparatuses, composite apparatus, air conditioning apparatuses and vending machines. The electronic apparatus may be a portable electronic apparatus such as a portable telephone. The present invention is similarly applicable to any electronic apparatus having at least one guidance part and a display part. In the case of the portable electronic apparatus, the guidance part itself becomes small because the portable electronic apparatus itself is small, thereby making the characters and/or pictures of the guidance information extremely small. However, by displaying the operation procedures related to battery replacement or the like on the display part of the portable electronic apparatus, the operator can easily understand the necessary operation procedures without erroneously recognizing the guidance information. In the case of the portable electronic apparatus, it is desirable to make the display instruction for the guidance information from the operation part when the limited space within the portable electronic apparatus is taken into consideration.

Further, the present invention is not limited to these embodiments, but various variations and modifications may be made without departing from the scope of the present invention.

## Claims

1. A guidance output method for an electronic apparatus having a guidance part which indicates guidance information including operation procedures and warnings related to maintenance, said guidance part being provided at a location corresponding to an apparatus part, within the electronic apparatus, to which the guidance information is related, said guidance output method comprising the steps of:
displaying, in response to a display instruction, guidance information indicated by a corresponding guidance part, on a display part of the electronic apparatus.

2. The guidance output method as claimed in claim 1, further comprising the steps of:
generating the display instruction in response to an operation of a switch which is provided at said location or a switch which is provided at a position other than said location.

3. The guidance output method as claimed in claim 1, further comprising the steps of:
generating the display instruction in response to an operation of a switch which is integrally provided on the guidance part.

4. The guidance output method as claimed in claim 1, wherein the guidance information has a hierarchical structure, and further comprising the steps of:
displaying guidance information of a hierarchical layer of the hierarchical structure specified by a layer specifying instruction.

5. The guidance output method as claimed in claim 1, wherein the guidance information includes at least one of information selected from a group consisting of operating instructions, cautions, layout of parts within the electronic apparatus, product name of the electronic apparatus, model number of the electronic apparatus, rated voltage, rated current, and methods of contacting services.

6. The guidance output method as claimed in claim 1, wherein the guidance information includes characters and/or pictures.

7. The guidance output method as claimed in claim 1, wherein said displaying step displays the guidance information on the display part after subjecting the guidance information to a color conversion process for facilitating color discrimination and/or an enlarging conversion process in response to a conversion instruction.

8. The guidance output method as claimed in claim 1, further comprising the steps of:
printing the guidance information in response to a print instruction.

9. The guidance output method as claimed in claim 1, further comprising the steps of:
printing the guidance information in response to a print instruction,
said printing step printing the guidance information after subjecting the guidance information to a color conversion process for facilitating color discrimination in response to a color conversion instruction.

10. The guidance output method as claimed in claim 1, wherein the electronic apparatus is selected from a group consisting of copying apparatus, facsimile apparatus, printing apparatus, composite apparatus, air conditioning apparatus, and vending machines.

11. An electronic apparatus comprising:
a display part;
a plurality of apparatus parts subject to maintenance;
at least one guidance part to indicate guidance information including operation procedures and warnings related to maintenance, said guidance part being provided at a location corresponding to one of the apparatus parts to which the guidance information is related; and
a controller to display guidance information indicated by a corresponding guidance part on the display part, in response to a display instruction.

12. The electronic apparatus as claimed in claim 11, further comprising:
a switch which is provided at said location or at a position other than said location,
said controller displaying the guidance information on the display part in response to a display instruction which is generated when the switch is operated.

13. The electronic apparatus as claimed in claim 11, further comprising:
a switch which is integrally provided on the guidance part,
said controller displaying the guidance information on the display part in response to a display instruction which is generated when the switch is operated.

14. The electronic apparatus as claimed in claim 11, wherein:
the guidance information has a hierarchical structure, and
said controller displays, on the display part, guidance information of a hierarchical layer of the hierarchical structure specified by a layer specifying instruction.

15. The electronic apparatus as claimed in claim 11, wherein the guidance information includes at least one of information selected from a group consisting of operating instructions, cautions, layout of parts within the electronic apparatus, product name of the electronic apparatus, model number of the electronic apparatus, rated voltage, rated current, and methods of contacting services.

16. The electronic apparatus as claimed in claim 11, wherein the guidance information includes characters and/or pictures.

17. The electronic apparatus as claimed in claim 11, wherein said controller displays the guidance information on the display part after subjecting the guidance information to a color conversion process for facilitating color discrimination and/or an enlarging conversion process in response to a conversion instruction.

18. The electronic apparatus as claimed in claim 11, further comprising:
a printing part,
said controller printing the guidance information by the printing part in response to a print instruction.

19. The electronic apparatus as claimed in claim 11, further comprising:
a printing part,
said controller printing the guidance information by the printing part after subjecting the guidance information to a color conversion process for facilitating color discrimination in response to a color conversion instruction.

20. The electronic apparatus as claimed in claim 11, wherein the electronic apparatus is selected from a group consisting of copying apparatus, facsimile apparatus, printing apparatus, composite apparatus, air conditioning apparatus, and vending machines.

21. A computer-readable storage medium which stores a program for a computer within an electronic apparatus having a guidance part which indicates guidance information including operation procedures and warnings related to maintenance, said guidance part being provided at a location corresponding to an apparatus part, within the electronic apparatus, to which the guidance information is related, said program causing the computer to display the guidance information and comprising:
a display procedure causing the computer to display, in response to a display instruction, guidance information indicated by a corresponding guidance part, on a display part of the electronic apparatus.

22. The computer-readable storage medium as claimed in claim 21, wherein said program further comprises:
a procedure causing the computer to receive the display instruction from a switch which is provided at said location or from a switch which is provided at a position other than said location, when the switch is operated.

23. The computer-readable storage medium as claimed in claim 21, wherein said program further comprises:
a procedure causing the computer to receive the display instruction from a switch which is integrally provided on the guidance part, when the switch is operated.

24. The computer-readable storage medium as claimed in claim 21, wherein the guidance information has a hierarchical structure, and said program further comprises:
a procedure causing the computer to display guidance information of a hierarchical layer of the hierarchical structure specified by a layer specifying instruction.

25. The computer-readable storage medium as claimed in claim 21, wherein the guidance information includes at least one of information selected from a group consisting of operating instructions, cautions, layout of parts within the electronic apparatus, product name of the electronic apparatus, model number of the electronic apparatus, rated voltage, rated current, and methods of contacting services.

26. The computer-readable storage medium as claimed in claim 21, wherein the guidance information includes characters and/or pictures.

27. The computer-readable storage medium as claimed in claim 21, wherein said display procedure causes the computer to display the guidance information on the display part after subjecting the guidance information to a color conversion process for facilitating color discrimination and/or an enlarging conversion process in response to a conversion instruction.

28. The computer-readable storage medium as claimed in claim 21, wherein said program further comprises:
a print procedure causing the computer to print the guidance information in response to a print instruction.

29. The computer-readable storage medium as claimed in claim 21, wherein said program further comprises:
a print procedure causing the computer to print the guidance information in response to a print instruction,
said print procedure causing the computer to print the guidance information after subjecting the guidance information to a color conversion process for facilitating color discrimination in response to a color conversion instruction.

30. The computer-readable storage medium as claimed in claim 21, wherein the electronic apparatus is selected from a group consisting of copying apparatus, facsimile apparatus, printing apparatus, composite apparatus, air conditioning apparatus, and vending machines.

31. An electronic apparatus comprising:
display means;
a plurality of apparatus parts subject to maintenance;
at least one guidance part to indicate guidance information including operation procedures and warnings related to maintenance, said guidance part being provided at a location corresponding to one of the apparatus parts to which the guidance information is related; and
control means for displaying guidance information indicated by a corresponding guidance part on the display means, in response to a display instruction.
